# EUROPEAN PATENT APPLICATION

(11) **EP 4 693 500 A1**
(43) Date of publication of application: **11.02.2026**
(21) Application number: 24849675.4
(22) Date of filing: 05.08.2024
(51) Int. Cl.: H01M 4/587, H01M 4/36, H01M 4/62, H01M 4/133, H01M 4/1393, H01M 4/04, H01M 10/052, H01M 4/02

(54) **ELECTRODE, MANUFACTURING METHOD THEREOF, AND ELECTROCHEMICAL DEVICE COMPRISING SAME**

(30) Priority: 03.08.2023 KR 20230101866
(71) Applicant: LG Energy Solution, Ltd., Seoul 07335 (KR)
(72) Inventor: YOON, Kyung-Hwan, Daejeon 34122 (KR); PARK, Joo-Ho, Daejeon 34122 (KR); LIM, Chang-Yoon, Daejeon 34122 (KR); JANG, Seok-Hoon, Daejeon 34122 (KR); JO, Yoo-Sang, Daejeon 34122 (KR); PARK, Moon-Soo, Daejeon 34122 (KR)
(74) Representative: Goddar, Heinz J.
(86) International application number: PCT/KR2024/011546
(87) International publication number: WO 2025/029108

(57) **Abstract**

There are disclosed an electrode including a current collector and an electrode active material layer located on at least one surface of the current collector, wherein the electrode active material layer includes granules including an electrode active material and a first binder; and second binder particles, a method for manufacturing the same, and an electrochemical device including the same.

## Description

### TECHNICAL FIELD

The present disclosure relates to an electrode, a method for manufacturing the same and an electrochemical device including the same.

The present application claims priority to Korean Patent Application No. 10-2023-0101866 filed on August 3, 2023 in the Republic of Korea, the disclosure of which is incorporated herein by reference.

### BACKGROUND

Due to the increasing use of fossil fuels, there is a growing demand for the use of alternative energy and clean energy, and in such circumstances, many studies are being made in the field of energy generation and storage using electrochemistry. Currently, a typical example of electrochemical devices using electrical and chemical energy is secondary batteries, and the range of application of secondary batteries is gradually expanding. The most common secondary batteries are lithium secondary batteries, and lithium secondary batteries are used as not only an energy source of mobile devices but also a power source of electric vehicles and hybrid electric vehicles as an alternative to vehicles using fossil fuels such as gasoline vehicles and diesel vehicles that are regarded as one of the main causes of air pollution, and they have a diverse range of applications including use as an auxiliary power source via a grid.

A process of manufacturing a lithium secondary battery largely includes three steps, an electrode manufacturing process, an electrode assembly manufacturing process and a formation process. The electrode manufacturing process includes an electrode material mixing process, an electrode coating process, a drying process, a rolling process, a slitting process and a winding process.

The electrode material mixing process is a process of mixing the components for forming an electrode active layer in which electrochemical reaction actually occurs in the electrode, and specifically, an electrode active material that is the essential element of the electrode and an additive, for example, a conductive material, fillers, a binder for holding granules together and adhesion to the current collector, and a solvent for making the solution viscous and dispersing granules are mixed together to prepare a flowable slurry.

The electrode coating process of coating the slurry on the electrically conductive current collector, and the drying process for removing the solvent included in the electrode material mixture slurry are performed, followed by electrode rolling, to manufacture an electrode with a predetermined thickness.

During the drying, defects such as pinholes or cracks may occur in the electrode active layer due to evaporation of the solvent included in the electrode material mixture. Additionally, the active layer is not uniformly dried all over the entire inner/outer area, and due to a difference in solvent evaporation rate, some regions get dried earlier and the binder at the corresponding regions float, and some other regions get dried later at a time interval, resulting in low quality of the electrode.

To solve this problem, efforts have been devoted to dryers for uniformly drying the inner and outer area of the active layer and adjusting the solvent evaporation rate, but these dryers are very expensive and require a considerate amount of costs and time to operate them, so it is disadvantageous in terms of manufacturing process.

Recently, many studies are being made to manufacture dry electrodes without solvents.

The dry electrode is manufactured by mixing an active material with a binder such as polytetrafluoroethylene (PTFE) and feeding between calendaring rolls to make an electrode, or spray-drying a mixed solution of active material and binder to produce granules and feeding the granules between calendaring rolls.

In the latter case, in the electrode manufactured by pressing the granules between the calendaring rolls, when the bond strength between granules is insufficient, there is still the problem with separation of the granules from the surface or edge of the electrode in the roll winding process of the electrode.

### DISCLOSURE

### Technical Problem

The present disclosure is directed to providing an electrode with improved bond strength between granules, a method for manufacturing the electrode, and an electrochemical device including the negative electrode.

### Technical Solution

To solve the above-described problems, according to an aspect of the present disclosure, there is provided an electrode of the following embodiment.

According to a first embodiment,
there is provided an electrode including a current collector and an electrode active material layer located on at least one surface of the current collector,
wherein the electrode active material layer includes granules including an electrode active material and a first binder; and second binder particles.

According to a second embodiment, in the first embodiment,
a domain size of the second binder particles may be from 10 *µ*m² to 15 *µ*m².

According to a third embodiment, in the first or second embodiment,
a melting point of the second binder particles may be 150°C or less.

According to a fourth embodiment, in any one of the first to third embodiments,
an average particle size (D50) of the granules may be larger than an average particle size (D50) of the second binder particles.

According to a fifth embodiment, in any one of the first to fourth embodiments,
a ratio of an average particle size (D50) of the granules to an average particle size (D50) of the second binder particles may be from 1:0.1 to 1:0.5.

According to a sixth embodiment, in any one of the first to fifth embodiments,
an average particle size (D50) of the granules may be from 40 *µ*m to 100 *µ*m.

According to a seventh embodiment, in any one of the first to sixth embodiments,
an average particle size (D50) of the second binder particles may be from 4 *µ*m to 10 *µ*m.

According to an eighth embodiment, in any one of the first to seventh embodiments,
a weight ratio of the granules to the second binder particles may be from 99:1 to 60:40.

According to a ninth embodiment, in any one of the first to eighth embodiments,
the second binder particles may include polyethylene, high density polyethylene (HDPE), low density polyethylene (LDPE), polypropylene, EVA (a copolymer of ethylene and vinyl acetate (VA)), or two or more of them.

According to a tenth embodiment, in any one of the first to ninth embodiments,
the granules may further include a conductive material.

According to an eleventh embodiment, in any one of the first to tenth embodiments,
the first binder may include a diene-based polymer, an acrylate-based polymer, a styrene-based polymer, a polyvinylidene fluoride (PVDF)-based polymer, a polyacrylonitrile-based polymer, a vinyl-based polymer, a polyoxide-based polymer, a polyacrylamide, a cellulose-based polymer or two or more of them.

According to a twelfth embodiment, in any one of the first to eleventh embodiments,
an amount of the electrode active material may be from 95 parts by weight to 98 parts by weight, and an amount of the first binder may be from 2 parts by weight to 5 parts by weight, based on 100 parts by weight of the granules.

According to a thirteenth embodiment,
there is provided a method for manufacturing the electrode of any one of the first to twelfth embodiments, including the steps of: drying a composition including the electrode active material, the first binder, and a first water-based dispersion medium by a spray drying method to manufacture the granules;
mixing the granules with the second binder particles to prepare a mixture; and
coating the mixture on the at least one surface of the current collector and rolling to form the electrode active material layer.

According to a fourteenth embodiment,
there is provided an electrochemical device including the negative electrode according to any one of the first to twelfth embodiments.

According to a fifteenth embodiment, in the fourteenth embodiment,
the electrochemical device may be a secondary battery.

### Advantageous Effects

According to an embodiment of the present disclosure, the manufacture of the electrode involves adding a small amount of binder particles to granules to improve the bond strength between the granules, thereby remarkably improving the adhesion strength between the current collector and the electrode active material layer, and preventing separation of granules of the electrode active material layer from the cut surface of the electrode during notching in the electrode manufacturing process, leading to significantly improved electrode manufacturing process efficiency.

### BRIEF DESCRIPTION OF THE DRAWINGS

The accompanying drawings illustrate an exemplary embodiment of the present disclosure and together with the foregoing description, serve to provide a further understanding of the technical aspect of the present disclosure, and thus, the present disclosure is not construed as being limited to the drawings.
FIG. 1 is a diagram schematically showing a surface portion and a central portion of a granule included in an electrode according to an embodiment of the present disclosure.
FIG. 2 is a diagram schematically showing a process of manufacturing an electrode according to the related art.
FIG. 3 is a diagram schematically showing a process of manufacturing an electrode according to an embodiment of the present disclosure.

### BEST MODE

Hereinafter, the present disclosure will be described in more detail to help an understanding of the present disclosure.

It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

The terms used herein are used to describe exemplary embodiments, but not intended to be limiting of the present disclosure. As used herein, the singular forms include the plural forms as well, unless the context clearly indicates otherwise.

It should be further understood that 'comprise' or 'include' when used in the specification, specifies the presence of stated elements and does not preclude the presence or addition of one or more other elements unless expressly stated otherwise.

Additionally, the terms 'about' and 'substantially' are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

In the specification, 'A and/or B' as used herein refers to either A or B or both.

The "glass transition temperature Tg" as used herein is measured by the method commonly used in the corresponding field, and for example, may be measured by differential scanning calorimetry (DSC).

The "porosity" as used herein refers to the ratio of pore volume in a structure to its total volume and is indicated in vol%, and may be used interchangeably with void fraction, degree of porosity or the like. In the present disclosure, the measurement of the porosity is not limited to a particular method, and according to an embodiment of the present disclosure, for example, the porosity may be measured by a Brunauer-Emmett-Teller (BET) measurement method using nitrogen gas, Hg porosimeter and ASTM D-2873. Alternatively, the net density of the separator may be calculated from the density (apparent density) of the separator, the composition ratio of the materials included in the separator and the density of each component, and the porosity of the separator may be calculated from a difference of apparent density and net density.

The "average particle size D₅₀" as used herein refers to a particle size at 50% of cumulative particle size distribution of particles, and the particle size may be measured using a laser diffraction method. Specifically, the particle size distribution is calculated by dispersing target powder in a dispersion medium, feeding it into a commercially available laser diffraction particle size measurement device (for example, Microtrac S3500) and measuring a diffraction pattern difference according to the particle size when particles pass through a laser beam. The particle size D₅₀ may be measured by calculating the particle diameter at 50% of the cumulative particle size distribution of particles in the measurement device.

The "thickness" of a layer included in the electrode as used herein may indicate a value measured by the commonly used thickness measurement method. The thickness measurement method is not limited thereto, but the thickness may be, for example, a value measured using a thickness measurement device (Mitutoyo, VL-50S-B).

The "specific surface area" as used herein may indicate a value measured by the known method for measuring the specific surface area. The method for measuring the specific surface area is not limited thereto, but the specific surface area may be, for example, a value measured by a flowable or fixed method.

According to an aspect of the present disclosure,
there is provided an electrode including a current collector and an electrode active material layer located on at least one surface of the current collector, wherein the electrode active material layer includes granules including an electrode active material and a first binder; and second binder particles.

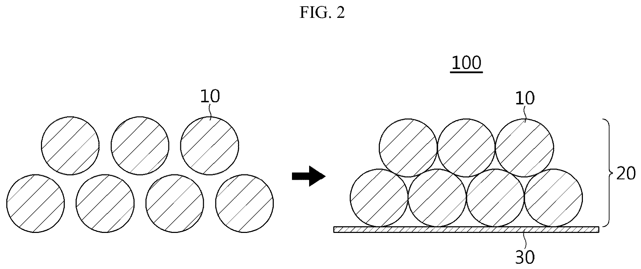

FIG. 2 is a diagram schematically showing a process of manufacturing an electrode according to the related art.

Referring to FIG. 2, the electrode 100 according to the related art is manufactured by coating the granules 10 on the current collector 30 and performing a rolling process to press the granules 10 to form the electrode active material layer 20, but when the bond strength between granules is insufficient, the granules may be separated from the surface or edge of the electrode in a roll winding process of the electrode.

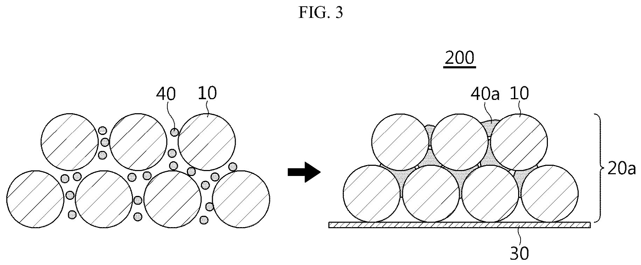

Meanwhile, FIG. 3 is a diagram schematically showing a process of manufacturing an electrode according to an embodiment of the present disclosure.

Referring to FIG. 3, the electrode 200 according to an embodiment of the present disclosure is manufactured by coating the granules 10 and the second binder particles 40 on the current collector 30 together and performing the rolling process to press the granules 10 and the second binder particles 40 to form the electrode active material layer 20a, and in this instance, the second binder particles 40 are deformed into second binder particles 40a in the electrode manufacturing process and play a role in increasing the cohesion between the granules 10 by filling the void space between the granules 10 in contact with each other. As a result, it may be possible to improve the bond strength between granules, thereby remarkably improving the adhesion strength between the current collector and the electrode active material layer and preventing separation of granules of the electrode active material layer from the cut surface of the electrode during notching in the electrode manufacturing process, leading to significantly improved electrode manufacturing process efficiency.

### <Granule>

Hereinafter, the granule will be described in detail.

In the present disclosure, the granule includes the electrode active material and the first binder. The granule may further include a conductive material if necessary. Additionally, the granule may have a form of a composite particle further including any other component added.

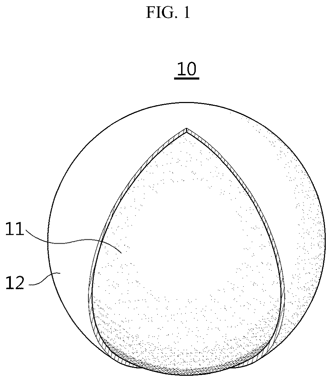

FIG. 1 shows a surface portion and a central portion of a granule included in the electrode of an embodiment of the present disclosure. Referring to FIG. 1, in an embodiment of the present disclosure, the granule 10 may have a larger amount of the first binder included in the surface portion 12 of the granule than the amount of the first binder included in the central portion 11 of the granule. The amount of the binder may refer to weight or volume.

Together with this or independently of this, the granule has a larger amount (wt%)(Bₛ/Gₜ) of the first binder included in the surface portion 12 of the granule than the amount (wt%)(B_{c}/Gₜ) of the first binder included in the central portion 11 of the granule based on the total weight 100 wt% of the granule. Here, Bc denotes the weight of the binder included in the central portion, Bs denotes the weight of the binder included in the surface portion, and Gt denotes the total weight of the granule particle.

Together with this or independently of this, the granule has a larger amount (vol%)(Bₛ/Gₜ) of the first binder included in the surface portion 12 of the granule than the amount (vol%)(B_{c}/Gₜ) of the first binder included in the central portion 11 of the granule based on the total volume 100 vol% of the granule. Here, Bc denotes the volume of the binder included in the central portion, Bs denotes the volume of the binder included in the surface portion, and Gt denotes the total volume of the granule.

Here, the surface portion may refer to an area near the granule surface to a predetermined depth in a direction from the granule surface toward the granule center. The central portion refers to an area other than the surface portion. In an embodiment of the present disclosure, the surface portion may refer to a surface area up to 30% of the radius, specifically inward from the surface of the granule, specifically toward the center of the granule. In an embodiment of the present disclosure, the surface portion may refer to a surface area from the surface of the granule up to 30%, 20%, 15%, 10% or 5% of the radius. Preferably, the surface portion may refer to a surface area from the surface of the granule up to 20% of the radius.

Meanwhile, in an embodiment of the present disclosure, the surface portion may refer to an area up to the granule surface after reaching 70% or more of the radius from the center of the granule in the outward direction of the granule. In an embodiment of the present disclosure, the surface portion may refer to, for example, an area up to the granule surface of 80% or more, 85% or more, 90% or more, or 95% or more of the radius.

In an embodiment of the present disclosure, the center of the granule may refer to a 1/2 point of the longest diameter of the granule. In the present disclosure, the radius may refer to a distance from the center of the granule to each point of the granule surface. In an embodiment of the present disclosure, the surface portion and the central portion may be divided on the basis of a point at the same distance from each surface of the granule along each radius, specifically a point at 30%, 20%, 10%, 5% or 1% of the radius from the surface.

In an embodiment of the present disclosure, in the area up to the granule surface after reaching 90% or more of the radius from the granule particle center, the amount of the first binder may be 50 wt% or more, 60 wt% or more, 70 wt% or more, 80 wt% or more, or 90 wt% or more based on the total weight 100 wt% of the granule in the corresponding area.

In another embodiment of the present disclosure, in the area up to the granule surface after reaching 95% or more of the particle radius from the granule particle center, the amount of the first binder may be 50 wt% or more, 60 wt% or more, 70 wt% or more, 80 wt% or more or 90 wt% or more based on the total weight 100 wt% of the granule in the corresponding area.

In another embodiment of the present disclosure, in the area up to the granule surface after reaching 99% or more of the radius from the granule particle center, the amount of the first binder may be 50 wt% or more, 60 wt% or more, 70 wt% or more, 80 wt% or more, or 90 wt% or more based on the total weight 100 wt% of the granule in the corresponding area.

In an embodiment of the present disclosure, in the area up to the granule surface after reaching 90% or more of the radius from the granule particle center, the amount of the first binder may be 50 vol% or more, 60 vol% or more, 70 vol% or more, 80 vol% or more, or 90 vol% or more based on the total volume 100 vol% of the granule in the corresponding area.

In another embodiment of the present disclosure, in the area up to the granule surface after reaching 95% or more of the particle radius from the granule particle center, the amount of the first binder may be 50 vol% or more, 60 vol% or more, 70 vol% or more, 80 vol% or more, or 90 vol% or more based on the total volume 100 vol% of the granule in corresponding area.

In another embodiment of the present disclosure, in the area up to the granule surface after reaching 99% or more of the radius from the granule particle center, the amount of the first binder may be 50 vol% or more, 60 vol% or more, 70 vol% or more, 80 vol% or more, or 90 vol% or more based on the total volume 100 vol% of the granule in the corresponding area.

In an embodiment of the present disclosure, in the granule surface area up to 10% of the radius from the granule particle surface, the amount of the first binder may be 50 wt% or more, 60 wt% or more, 70 wt% or more, 80 wt% or more, or 90 wt% or more based on the total weight 100 wt% of the granule in corresponding area.

In another embodiment of the present disclosure, in the granule surface area up to 5% of the radius from the granule particle surface, the amount of the first binder may be 50 wt% or more, 60 wt% or more, 70 wt% or more, 80 wt% or more or 90 wt% or more based on the total weight 100 wt% of the granule in corresponding area.

In another embodiment of the present disclosure, in the granule surface area of 1% or more of the radius from the granule particle surface, the amount of the first binder may be 50 wt% or more, 60 wt% or more, 70 wt% or more, 80 wt% or more, or 90 wt% or more based on the total weight 100 wt% of the granule in corresponding area.

In an embodiment of the present disclosure, in the granule surface area up to 10% of the radius from the granule particle surface, the amount of the first binder may be 50 vol% or more, 60 vol% or more, 70 vol % or more, 80 vol % or more, or 90 vol % or more based on the total volume 100 vol% of the granule in corresponding area.

In another embodiment of the present disclosure, in the granule surface area up to 5% of the radius from the granule particle surface, the amount of the first binder may be 50 vol% or more, 60 vol% or more, 70 vol% or more, 80 vol% or more or 90 vol% or more based on the total volume 100 vol % of the granule in corresponding area.

In another embodiment of the present disclosure, in the granule surface area of 1% or more of the radius from the granule particle surface, the amount of the first binder may be 50 vol% or more, 60 vol% or more, 70 vol% or more, 80 vol% or more, or 90 vol% or more based on the total volume 100 vol% of the granule in corresponding area.

According to an embodiment of the present disclosure, it is confirmed that the granule has the surface portion area having high binder content from the surface to the predetermined depth in the direction toward the particle center, and the binder distribution in the other area than the surface portion, i.e., the central portion (a core portion) surrounded by the surface portion may be lower than the surface portion.

Describing the granule in more detail, the granule may have the central portion including the electrode active material of primary particles; and the surface portion located at all or part of the outer side of the central portion and including the first binder to bind the electrode active materials. That is, in the central portion of the granule, the plurality of electrode active materials may form an agglomerate by at least one of surface contact, line contact, point contact or two or more of these contacts, and in the surface portion of the granule, the first binder may be located at all or part of the outer side of the agglomerate, and hold and bind the plurality of electrode active materials of the central portion of the granule together.

According to an embodiment of the present disclosure, the central portion may further include a small amount of first binder to connect and hold the plurality of electrode active materials of the central portion together. However, as described above, the ratio of the amount of the first binder in the surface portion is preferably higher than that of the central portion.

Meanwhile, in an embodiment of the present disclosure, the granule may have an aspect ratio of from 0.5 to 1.0, and preferably from 0.75 to 1.0. The aspect ratio may refer to a ratio of the short axis length to the long axis length of the granule. In another embodiment of the present disclosure, an average aspect ratio of granules may have a value of from 0.5 to 1.0, preferably from 0.75 to 1.0, and in this case, the average aspect ratio may refer to a ratio of the average short axis length to the average long axis length of the granule particles. In this instance, the average short axis length may refer to the average value of length in the axial direction having the shortest length of the granule, and the average long axis length may refer to the average value of length in the axial direction having the longest length of the granule. When the aspect ratio of the granule lies in the aforementioned range, it is advantageous due to having sufficient flowability suitable for the process.

According to an embodiment of the present disclosure, the electrode may be a positive or negative electrode, and the active material may be a positive or negative electrode active material.

The positive electrode active material may include, for example, lithium transition metal oxide; lithium metal iron phosphate; lithium nickel-manganese-cobalt oxide; oxide with partial substitution of transition metal in lithium nickel-manganese-cobalt oxide, or two or more of them, but is not limited thereto. Specifically, the positive electrode active material may include, for example, layered compounds such as lithium cobalt oxide (LiCoO₂), lithium nickel oxide (LiNiO₂) or compounds with one or more transition metal substitution; lithium manganese oxide of formula Li₁₊ₓMn₂₋ₓO₄ (x is 0 to 0.33), LiMnO₃, LiMn₂O₃, LiMnO₂; lithium copper oxide (Li₂CuO₂); vanadium oxide such as LiV₃O₈, LiV₃O₄, V₂O₅, Cu₂V₂O₇; Ni site lithium nickel oxide represented by formula LiNi₁₋ₓMₓO₂ (M = Co, Mn, Al, Cu, Fe, Mg, B or Ga, x = 0.01 to 0.3); lithium manganese composite oxide represented by formula LiMn₂₋ₓMₓO₂ (M = Co, Ni, Fe, Cr, Zn or Ta, x = 0.01 to 0.1) or Li₂Mn₃MO₈ (M = Fe, Co, Ni, Cu or Zn); lithium metal phosphate LiMPO₄ (M = Fe, Co, Ni, or Mn); lithium nickel-manganese-cobalt oxide Li₁₊ₓ(NiₐCo_{b}Mn_{c})₁₋ₓO₂(x = 0 to 0.03, a = 0.3 to 0.95, b = 0.01 to 0.35, c = 0.01 to 0.5, a+b+c=1); oxide (lithium nickel-manganese-cobalt-aluminum oxide) Liₐ[Ni_{b}Co_{c}Mn_{d}Alₑ]_{1-f}M¹_{f}O₂ with partial substitution of aluminum in lithium nickel-manganese-cobalt oxide (M¹ is at least one selected from the group consisting of Zr, B, W, Mg, Ce, Hf, Ta, La, Ti, Sr, Ba, F, P and S, 0.8≤a≤1.2, 0.5≤b≤0.99, 0<c<0.5, 0<d<0.5, 0.01≤e≤0.1, 0≤f≤0.1), disulfide compounds; Fe₂(MoO₄)₃ but is not limited thereto. Specifically, the lithium nickel-manganese-cobalt-aluminum oxide may be Li[Ni_{0.88}Co_{0.07}Mn_{0.04}Al_{0.01}]O₂.

Additionally, the negative electrode active material may include carbon such as nongraphitizing carbon, graphite-based carbon; metal composite oxide such as LiₓFe₂O₃(0≤x≤1), LiₓWO₂(0≤x≤1), SnₓMe₁₋ₓMe'_{y}O_{z} (Me: Mn, Fe, Pb, Ge; Me': Al, B, P, Si, Groups 1, 2 and 3 elements in the periodic table, halogen; 0≤x≤1; 1≤y≤3; 1≤z≤8); lithium metal; lithium alloys; silicon-based alloys; tin-based alloys; silicon-based oxide such as SiO, SiO/C, SiO₂; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymer such as polyacetylene; Li-Co-Ni-based materials.

According to an embodiment of the present disclosure, the electrode may be a positive electrode, and accordingly, the active material may be, specifically, a positive electrode active material, and more specifically, lithium transition metal oxide, lithium nickel-manganese-cobalt oxide, oxide with partial substitution of Al or other transition metal in lithium nickel-manganese-cobalt oxide, lithium iron phosphate.

According to an embodiment of the present disclosure, the granule may further include the conductive material. The conductive material may include at least one of a point shaped conductive material or a linear shaped conductive material.

The point shape of the point shaped conductive material may refer to a spherical particle shape having the average diameter D50 ranging from 10 nm to 500 nm, specifically from 15 nm to 100 nm.

Additionally, the first conductive material may include any conductive material of the spherical particle shape having the above-described average diameter. Specific examples of the first conductive material may include carbon black, Denka black, acetylene black, Ketjen black, channel black, furnace black, lamp black, thermal black or two or more of them.

In the linear shaped conductive material, the linear shape refers to a needle-like particle shape having an aspect ratio (a length-to-diameter ratio) ranging, for example, from 10 to 1,000, specifically from 20 to 500. For example, according to an embodiment of the present disclosure, the linear shaped conductive material may have the average diameter of from 10 nm to 500 nm, specifically from 20 nm to 300 nm. Additionally, the linear shaped conductive material used in an embodiment of the present disclosure may have the average length of from 3 *µ*m to 50 *µ*m, specifically from 5 *µ*m to 30 *µ*m, more specifically from 5 *µ*m to 20 *µ*m, more specifically from 10 *µ*m to 20 *µ*m, more specifically from 13 *µ*m to 17 *µ*m.

Here, the average diameter is the arithmetic mean of diameter of the vertical plane in the length direction of the linear shaped conductive material, and for example, may be calculated from a scanning electron microscopic (SEM) image taken at 2,000 to 50,000x magnification by a field emission scanning electron microscope. Additionally, the average length is the arithmetic mean of length of the linear shaped conductive material, and may be calculated by the same method as the average diameter.

The linear shaped conductive material may include carbon nanotubes, carbon nanofibers or two or more of them. The carbon nanotubes may include, for example, single-walled carbon nanotubes, double-walled carbon nanotubes and multi-walled carbon nanotubes.

The single-walled carbon nanotube refers to a carbon nanotube composed of six carbon atoms connected in a hexagonal shape to form a tube, in which the number of walls (graphite faces) is only one. The single-walled carbon nanotubes have the outstanding electrical properties due to the one-dimensional structure and exhibit diverse electrical properties according to the hexagonal honeycomb shaped molecular asymmetry (chirality) structure and diameter, and the multi-walled carbon nanotubes refer to carbon nanotubes in which the number of walls is multiple.

The average diameter of the single-walled carbon nanotubes may be from 0.5 nm to 15 nm. According to an embodiment of the present disclosure, the average diameter of the single-walled carbon nanotubes may be from 1 nm to 10 nm, or from 1 nm to 5 nm, or from 1 nm to 2 nm. When the average diameter of the single-walled carbon nanotubes lies in the aforementioned range, electrical conductivity of the negative electrode may be maintained with even a small amount of single-walled carbon nanotubes. The BET specific surface area of the single-walled carbon nanotubes may be from 500 m²/g to 1,500 m²/g, or from 900 m²/g to 1,200 m²/g. When the BET specific surface area lies in the aforementioned range, a conductive material dispersion having preferred solids content may be produced. The BET specific surface area may be measured through a nitrogen absorption BET method. The aspect ratio of the single-walled carbon nanotubes may be from 50 to 20,000, or the length of the single-walled carbon nanotubes may be from 5 *µ*m to 100 *µ*m, or from 5 *µ*m to 50 *µ*m. The aspect ratio may be calculated by averaging the aspect ratios of 15 single-walled carbon nanotubes having high aspect ratios and 15 single-walled carbon nanotubes having low aspect ratios when observing the single-walled carbon nanotubes powder through SEM.

The single-walled carbon nanotubes are longer in length and larger in volume due to higher aspect ratio than multi-walled carbon nanotubes or double-walled carbon nanotubes, so it may be more advantageous because single-walled carbon nanotubes even in a small amount may form electrical networks.

The linear shaped conductive material may play a role of a matrix surrounding the electrode active material to exert the volume expansion suppression effect of the electrode active material, and maintain the structure of the negative electrode active material layer including the electrode active material during charging and discharging, thereby contributing to the long life, and to increase the movement distance of electrons so that the negative electrode active material located in the upper and lower parts of the negative electrode active material layer can participate in charging and discharging reaction, thereby improving high-rate charging and discharging performance.

Additionally, when the point shaped conductive material is used as the first conductive material included in the granule, the point shaped conductive material may contact the electrode active material over a large area, thereby improving high-rate characteristics.

According to an embodiment of the present disclosure, when the point shaped conductive material and the linear shaped conductive material are used together as the first conductive material, or the linear shaped conductive material is used as the first conductive material and the point shaped conductive material is used as a second conductive material as described below, the linear shaped conductive material and the point shaped conductive material may be uniformly distributed in the negative electrode active material layer, and the above-described beneficial effects of the linear shaped conductive material and the point shaped conductive material may be exerted at the same time, and in particular, electrical networks may be sufficiently formed in the negative electrode active material layer by the use in smaller amounts than the conventional negative electrode using the linear shaped conductive material alone, thereby achieving high conductivity and expansion suppression performance of the electrode active material.

In an embodiment of the present disclosure, the amount of the first conductive material may be from 0.05 parts by weight to 1.5 parts by weight, or from 0.05 parts by weight to 1 part by weight based on 100 parts by weight of the electrode active material.

When the amount of the conductive material lies in the aforementioned range, this may have a beneficial effect in maintaining conductivity.

In an embodiment of the present disclosure, when the conductive material includes the linear shaped conductive material and the point shaped conductive material, a weight ratio of the linear shaped conductive material to the point shaped conductive material may be from 1 : 1 to 1 : 20, or from 1 : 4 to 1 : 10.

According to an embodiment of the present disclosure, the first binder may include a diene-based polymer, an acrylate-based polymer, a styrene-based polymer, a polyvinylidene fluoride (PVDF)-based polymer, a polyacrylonitrile-based polymer, a vinyl-based polymer, a polyoxide-based polymer, a polyacrylamide, a cellulose-based polymer, or two or more of them.

Examples of the diene-based polymer may include polymer including a conjugated diene derived monomer unit such as butadiene, isoprene and its hydrogenated product. A ratio of the conjugated diene derived monomer unit in the diene-based polymer may be usually 40 wt% or more, preferably 50 wt% or more, and more preferably 60 wt% or more. Specifically, the diene-based polymer may include a conjugated diene homopolymer such as polybutadiene or polyisoprene; an aromatic vinyl-conjugated diene copolymer such as styrene-butadiene copolymer (SBR) with carboxyl modification; a vinyl cyanide-conjugated diene copolymer such as an acrylonitrile-butadiene copolymer (NBR); hydrogenated SBR, hydrogenated NBR.

Examples of the acrylate-based polymer may include polymer including a monomer unit derived from acrylic acid ester and/or methacrylic acid ester. A ratio of the monomer unit derived from acrylic acid ester and/or methacrylic acid ester in the acrylate-based polymer may be usually 40 wt% or more, preferably 50 wt% or more, and more preferably 60 wt% or more. Specific examples of the acrylate-based polymer may include a cross-linked acrylate-based polymer such as an acrylic acid 2-ethylhexyl-methacrylic acid-acrylonitrile-ethyleneglycoldimethacrylate copolymer, an acrylic acid 2-ethylhexyl-methacrylic acid-methacrylonitrile-diethyleneglycoldimethacrylate copolymer, an acrylic acid 2-ethylhexyl-styrene-methacrylic acid-ethyleneglycoldimethacrylate copolymer, a butyl acrylate-acrylonitrile-diethyleneglycoldimethacrylate copolymer and a butyl acrylate-acrylic acid-trimethylolpropanetrimethacrylate copolymer; a copolymer of ethylene and (meth)acrylic acid ester such as an ethylene-methyl acrylate copolymer, an ethylene-methyl methacrylate copolymer, an ethylene-ethyl acrylate copolymer and an ethylene-ethyl methacrylate copolymer; a graft polymer with a radically polymerizable monomer grafted onto the copolymer of ethylene and (meth)acrylic acid ester. Meanwhile, the radically polymerizable monomer used in the graft polymer may include, for example, methyl methacrylate, acrylonitrile, methacrylic acid. Besides, a copolymer of ethylene and (meth)acrylic acid such as an ethylene-acrylic acid copolymer, an ethylene-methacrylic acid copolymer may be used as a dispersion binder.

The styrene-based polymer may include polymer having a styrene monomer derived repeat unit, for example, a styrene homopolymer (polystyrene), a styrene copolymer. Examples of the styrene copolymer may include a block copolymer such as a styrene-butadiene copolymer (SBR), a styrene-ethylene-butadiene copolymer, a styrene-butadiene-propylene copolymer, a styrene-butadiene-acrylate copolymer (SBR-acrylate) (for example, a styrene-n-butyl acrylate-itaconic acid-methyl methacrylate-acrylonitrile copolymer, a styrene-n-butyl acrylate-itaconic acid-methyl methacrylate-acrylonitrile copolymer, etc.), a styrene-isoprene copolymer, a styrene-butadiene block copolymer, a styrene-butadienestyrene·block copolymer, a styrene-ethylene-butylene-styrene·block copolymer, a styrene-isoprene·block copolymer, a styrene-ethylene-propylene-styrene·block copolymer.

The PVDF-based polymer may include polyvinylidene fluoride (PVDF), polyvinylidene fluoride-co-hexafluoropropylene (PVDF-HFP), polyvinylidene fluoride-co-trichloroethylene (PVDF-TCE) and polyvinylidene fluoride-co-trifluoroethylene (PVDF-CTFE) or a mixture thereof.

The polyacrylonitrile-based polymer may include polyacrylonitrile, acrylamide-acrylonitrile-acrylic acid terpolymer.

The vinyl-based polymer may include polyvinylalcohol, polyvinylpropylene, polyvinylacetate.

The polyoxide-based polymer may include polyethyleneoxide, polypropylene oxide.

The cellulose-based polymer may include carboxymethyl cellulose (CMC), carboxyethylcellulose.

Among them, the diene-based polymer and the cross-linked acrylate-based polymer is preferred, and the cross-linked acrylate-based polymer is especially preferred, since it is possible to obtain granules having good binding to the current collector or good surface flatness and manufacture electrodes for electrochemical devices having high electrostatic capacity and low internal resistance.

The first binder is not limited to a particular shape, but particulate binder is preferred because the binding performance is good and it is possible to suppress the decline in electrostatic capacity of the manufactured electrode or degradation by the repeated charging/discharging. The particulate point shaped binder may include, for example, a dispersion of dispersible binder particles in a solvent such as water like latex, or powder obtained by drying the dispersion.

In an embodiment of the present disclosure, the amount of the first binder may be from 2 parts by weight to 5 parts by weight, or from 2.5 parts by weight to 3 parts by weight, based on 100 parts by weight of the electrode active material.

Additionally, in an embodiment of the present disclosure, when the granule further includes the conductive material, the amount of the conductive material may be from 0.05 parts by weight to 1.5 parts by weight, or from 0.05 parts by weight to 1 part by weight based on 100 parts by weight of the electrode active material.

When the amount of the electrode active material, the first binder, or the conductive material in the granule lies in aforementioned range, it may be more advantageous in terms of electrode rolling and energy density.

The average particle size D50 of the granules may be from 40 *µ*m to 100 *µ*m, or from 55 *µ*m to 75 *µ*m. The average particle size D50 of the electrode active material may be from 12 *µ*m to 18 *µ*m, or from 14 *µ*m to 16 *µ*m.

The average particle size of the granules may be adjusted through atomizer speed and drying rate in the spraying process. Additionally, the average particle size of the granules may be adjusted by adjusting the number of electrode active materials.

When the average particle size of the granules and the electrode active material lies in the aforementioned range, it may be more advantageous in terms of production efficiency and capacity of the granule.

The sphericity of the granule may be 0.9 or more, or from 0.95 to 0.97.

The 'sphericity' of the granule refers to a value obtained by observing an image of the granule using SEM, measuring a circumference of a sphere having the same area as the projection image of the observed granule and calculating a ratio, and may be measured by applying the average sphericity of 10,000 particles.

The sphericity formula of the granule is as follows.
Sphericity = the circumference of the sphere having the same area/the perimeter length of the projection image

Additionally, the sphericity may be measured using an analyzer, for example, FPIA3000 (Malvern).

When the sphericity of the granule lies in the aforementioned range, slot die coating performance may be improved, and phase stability of the slurry may be further improved, and when a dry process as described below is used to manufacture the negative electrode, it may be possible to prevent faults in the sheeting process due to good flowability of the granule in the sheeting process, and it may be advantageous in the terms of continuous process.

### <Electrode active material layer>

The electrode of the present disclosure includes the current collector and the electrode active material layer located on at least one surface of the current collector, and the electrode active material layer includes the granules and the second binder particles as described above.

In the case of the conventional electrode manufactured by a dry method through coating granules on at least one surface of the current collector and post-processing such as rolling, even after the granules are squeezed between calendaring rolls into the electrode, due to insufficient bond strength between granules, granules come off from the cut surface in the notching process of the electrode, and to solve this problem, the present disclosure manufactures the electrode with an addition of the second binder particles to the granules to improve the bond strength between granules, thereby remarkably improving the adhesion strength between the current collector and the electrode active material layer, and preventing separation of granules of the electrode active material layer from the cut surface of the electrode, leading to significantly improved electrode manufacturing process efficiency.

That is, in the manufacture of the electrode of the present disclosure, in the process of mixing the granules and the second binder particles together to prepare a mixture, coating the mixture on at least one surface of the current collector and rolling with a roll press, the second binder particles are deformed and fill the void space between the granules in contact with each other and play a role in increasing the cohesion between the granules.

In an embodiment of the present disclosure, the melting point of the second binder particles may be 150°C or less, or from 50°C to 150°C, or from 70°C to 150°C, or from 100°C to 150°C. When the melting point of the second binder particles lies in the aforementioned range, it may be more advantageous in terms of rolling process efficiency of the electrode.

In this instance, the melting point of the second binder particles may be measured using Differential Scanning Calorimeter (DSC) (Model Name: DSC 2920, Manufacturer: TA instrument). Specifically, heat the second binder particles up to 200°C, maintain at the temperature for 5 minutes, cool down to 25°C, and raise the temperature again, and in this instance, each rate at which the temperature rises and drops may be adjusted to 10°C/min.

In an embodiment of the present disclosure, the average particle size D50 of the granules may be larger than the average particle size D50 of the second binder particles. Specifically, a ratio of the average particle size D50 of the granules to the average particle size D50 of the second binder particles may be from 1:0.1 to 1:0.5, or from 1:0.04 to 1:0.25.

The average particle size D50 of the granules may be from 40 *µ*m to 100 *µ*m, or from 55 *µ*m to 75 *µ*m as described above. The average particle size D50 of the second binder particles may be from 4 *µ*m to 10 *µ*m, or from 6 *µ*m to 10 *µ*m.

When the average particle size D50 of the granules is larger than the average particle size D50 of the second binder particles, and the ratio of the average particle size D50 of the granules to the average particle size D50 of the second binder particles lies in the aforementioned range, the second binder particles are located in the void space between the granules that face or contact each other, and more advantageously, after the subsequent rolling process, the second binder particles effectively act as an adhesive to connect and hold the granules together.

According to an embodiment of the present disclosure, a weight ratio of the granules to the second binder particles may be from 99:1 to 60:40, or from 99.75:0.25 to 99:1. When the weight ratio of the granules to the second binder particles lies in the aforementioned range, this may have a beneficial effect in improving the electrode adhesion strength and suppressing the resistance rise.

The aspect ratio of the second binder particle may be defined as a ratio of short axis to long axis in cross section of the second binder particle on the SEM image obtained by SEM.

According to an embodiment of the present disclosure, the aspect ratio of the second binder particles may be from 0.90 to 1, or from 0.90 to 0.97, or from 0.92 to 0.97, or from 0.90 to 0.92.

When the aspect ratio of the second binder particles lies in the aforementioned range, the second binder particles are positioned between the granules and the area of contact between the granules may be reduced, thereby preventing the resistance rise of the electrode, and significantly improving the adhesion strength between granules and the adhesion strength between the electrode active material layer and the current collector.

According to an embodiment of the present disclosure, when attaching a 3M tape to the 5x5 (cm2) electrode active material layer surface of the electrode, rolling back and forth over the upper surface of the 3M tape once on a 3kg loading roller, and subsequently, detaching the 3M tape, a thickness of a part of the electrode active material layer may be removed from the surface together with the 3M tape, and the inside of the electrode active material layer may be exposed, and in this instance, the aspect ratio of the second binder particles may be measured from the SEM image of the second binder particles obtained by observing the exposed electrode active material layer inside surface by SEM.

The domain size of the second binder particles may be defined as the area of the domain in which two or more second binder particles are agglomerated. Accordingly, the second binder particles that exist as one particle without agglomeration may be excluded from domain size calculation, and it can be seen that the smaller domain size of the second binder particles, fewer agglomerates of two or more second binder particles.

According to an embodiment of the present disclosure, the domain size of the second binder particles may be calculated by attaching the 3M tape to 5x5 (cm²) electrode active material layer surface of the electrode, rolling back and forth over the upper surface of the 3M tape once on the 3kg loading roller, and subsequently, detaching the 3M tape, so that a thickness of a part of the electrode active material layer may be removed from the surface together with the 3M tape, and the inside of the electrode active material layer may be exposed, and in this instance, capturing the SEM image of the exposed electrode active material layer inside surface by SEM, and subsequently, setting the domain area of the second binder particles through an image analyzer program (for example, Image J) and measuring the area of the corresponding domain.

According to an embodiment of the present disclosure, the domain size of the second binder particles may be from 10 *µ*m² to 15 *µ*m², or from 10 *µ*m² to 12 *µ*m², or from 12 *µ*m² to 15 *µ*m².

When the domain size of the second binder particles lies in the aforementioned range, the second binder particles form fewer agglomerates and are uniformly distributed in the electrode active material layer, leading to improved bond strength between granules and remarkably improved adhesion strength between the current collector and the electrode active material layer, thereby improving flexibility and preventing separation of granules of the electrode active material layer from the cut surface of the electrode during notching in the electrode manufacturing process.

In an embodiment of the present disclosure, the electrode active material layer may have the porosity of from 20 vol% to 40 vol%, and when the porosity lies in the aforementioned range, electrolyte wettability, shape stability and ionic conductivity may be further improved.

Meanwhile, according to an embodiment of the present disclosure, the thickness of the electrode active material layer may be, for example, from 30 *µ*m to 300 *µ*m, but is not limited thereto.

According to another embodiment of the present disclosure, the electrode active material layer may be a single layer including one unit active material layer.

According to an embodiment of the present disclosure, the electrode active material layer may have a multilayer structure including two or more unit active material layers stacked. In this instance, the electrode material included in each unit active material layer, for example, the electrode active material, the first binder, and the second binder particles may be identical or different for each layer, and is not limited thereto.

In an embodiment of the present disclosure, according to an embodiment of the present disclosure, the second binder particles may include polyethylene, high density polyethylene (HDPE), low density polyethylene (LDPE), polypropylene, EVA (a copolymer of ethylene and vinyl acetate (VA)), or two or more of them.

Additionally, the electrode according to an embodiment of the present disclosure may further include a conductive material to improve conductivity of the electrode active material layer.

The conductive material additionally included may include at least one of a point shaped conductive material or a linear shaped conductive material. In this instance, for the description of the point shaped conductive material and the linear shaped conductive material, reference may be made to the foregoing description of the conductive material.

Meanwhile, in some circumstances, the electrode active material layer may further include fillers to suppress the expansion of the electrode active material layer, and the fillers are not limited to a particular type and may include any fibrous material that does not cause any chemical change to the corresponding battery, and for example, may include fibrous materials such as glass fibers, carbon fibers.

The current collector is not limited to a particular type and may include any material that has high conductivity and does not cause any chemical change to the battery, for example, stainless steel, aluminum, nickel, titanium, sintered carbon, copper or aluminum or stainless steel treated with carbon, nickel, titanium or silver on the surface. Additionally, the current collector may have microtexture on the surface to increase the adhesion strength of the negative electrode active material, and may come in various type, for example, a film, a sheet, a foil, a net, a porous body, a foam, a nonwoven fabric or the like.

In an embodiment of the present disclosure, the current collector may have a primer layer on all or part of the current collector.

The primer layer may include a binder for the primer layer and a conductive material for the primer layer, and the sum of amounts of the binder and the conductive material in the primer layer may be 90 wt% or more.

The electrode according to an embodiment of the present disclosure includes the negative electrode active material layer including the granules, and in this instance, when the primer layer includes the binder and the conductive material such that the sum of amounts of the binder and the conductive material is 90 wt% or more, it may be possible to ensure time-dependent stability of the primer layer, thereby achieving good properties such as adhesion strength and life characteristics, but the present disclosure is not limited thereto.

According to an embodiment of the present disclosure, the primer layer includes the binder for the primer layer and the conductive material for the primer layer, and may further include a dispersant.

According to an embodiment of the present disclosure, the primer layer includes the binder for the primer layer and the conductive material for the primer layer, but may not substantially include the dispersant.

According to an embodiment of the present disclosure, the binder for the primer layer may include, without limitation, any type of binder commonly used in the primer layer.

According to another embodiment of the present disclosure, the binder for the primer layer may preferably include polymer that ensures the time-dependent stability of the primer layer. Specifically, the binder for the primer layer may have the glass transition temperature T_{g} of 45°C or less.

According to another embodiment of the present disclosure, the binder for the primer layer may include, for example, styrene butadiene rubber (SBR), butadiene rubber (BR), nitrile butadiene rubber (NBR), styrene butadiene styrene block polymer (SBS), styrene ethylene butadiene block polymer (SEB), styrene-(styrene butadiene)-styrene block polymer, natural rubber (NR), isoprene rubber (IR), ethylene-propylene-diene terpolymer (EPDM), poly(ethylene-co-propylene-co-5-methylene-2-norbornene), polytetrafluoroethylene (PTFE), polyvinylidene fluoride, polyvinyl chloride, polyvinylidene fluoride-co-hexafluoropropylene, polyvinylidene fluoride-co-trichloroethylene, polymethylmethacrylate, polyethylhexylacrylate, polybutylacrylate, polyacrylonitrile, polyvinylpyrrolidone, polyvinylacetate, polyethylene, polypropylene, polyethylene-co-vinyl acetate, polyethylene oxide, polypropylene oxide, polyarylate, cyanoethylpullulan, cyanoethylpolyvinylalcohol or two or more of them. Specifically, the binder may include a styrene butadiene copolymer (styrene butadiene rubber (SBR)), nitrile butadiene rubber (NBR), polymethylmethacrylate, polyethylhexylacrylate, polybutylacrylate or two or more of them.

According to another embodiment of the present disclosure, the binder for the primer layer may include one selected from the above-described types having the above-described glass transition temperature value or a mixture of two or more of them.

According to another embodiment of the present disclosure, the binder for the primer layer may include a styrene butadiene copolymer (SBR) having the glass transition temperature Tg of from -40°C to 45°C, nitrile butadiene rubber (NBR) having the glass transition temperature Tg of from -40°C to 45°C or a mixture thereof.

According to an embodiment of the present disclosure, the conductive material for the primer layer has the specific surface area of from 30 m²/g to 1,400 m²/g, and a spherical shape. In this instance, the primary particle size of the conductive material having the spherical shape may be, for example, from 10 nm to 100 nm, specifically from 15 nm to 70 nm, but is not limited thereto.

According to another embodiment of the present disclosure, the conductive material for the primer layer may have a tubular (tube type) shape having the specific surface area of from 10 m²/g to 400 m²/g. In this instance, in the conductive material having the tubular shape, the diameter of a cross section in a direction perpendicular to the length direction may be from 0.1 nm to 3 nm, and specifically from 0.3 nm to 1.5 nm, but is not limited thereto.

The conductive material for the primer layer is not limited to a particular type and may include any conductive material that does not cause any chemical change to the corresponding battery, and for example, may include graphite such as natural graphite or artificial graphite; carbon black-based carbon compounds such as carbon black, acetylene black, Ketjen black, channel black, furnace black, lamp black, thermal black; conductive fibers such as carbon fibers or metal fibers; metal granules such as fluorocarbon, aluminum, nickel granules; conductive whiskers such as zinc oxide, potassium titanate; conductive metal oxide such as titanium oxide; conductive materials such as polyphenylene derivatives, but specifically, to uniformly mix the conductive material and improve conductivity, the conductive material may include activated carbon, graphite, carbon black, carbon nanotubes or a mixture thereof, and more specifically, activated carbon.

According to an embodiment of the present disclosure, the primer layer may include the above-described composition and have the thickness of from 300 nm to 1.5 *µ*m, specifically from 700 nm to 1.3 *µ*m, but is not limited thereto.

### <Method for manufacturing electrode>

According to an aspect of the present disclosure, there is provided a method for manufacturing the electrode according to an embodiment of the present disclosure including the steps of: drying a composition including the electrode active material, the first binder, and the first water-based dispersion medium by a spray drying method to manufacture granules;
mixing the granules with the second binder particles to prepare a mixture; and
coating the mixture on at least one surface of the current collector and rolling to form the electrode active material layer.

First, the composition including the electrode active material, the first binder and the first water-based dispersion medium is dried by the spray drying method to manufacture the granules.

The electrode active material, the first binder and optionally an additive are dispersed or dissolved in the dispersion medium (a solvent for the first binder) to obtain the composition in which the electrode active material, the first binder and/or the additive is dispersed or dissolved.

The dispersion medium used to obtain the composition is, the most suitably, water, but an organic solvent may be used. The organic solvent may include, for example, alkylalcohols such as methylalcohol, ethylalcohol, propylalcohol; alkylketones such as acetone, methylethylketone; ethers such as tetrahydrofuran, dioxane, diglyme; amides such as diethylformamide, dimethylacetoamide, N-methyl-2-pyrrolidone (hereinafter referred to as NMP), dimethylimidazolidinone; sulfur-based solvents such as dimethylsulfoxide, sulfolane, but alcohols are preferred. When the organic solvent having lower boiling point than water is used together, the speed of drying in fluidized bed granulation may increase. Additionally, as the dispersion or dissolution of the negative electrode binder may change, the viscosity or flowability of the slurry may be adjusted according to the amount or type of the dispersion medium, thereby improving the production efficiency.

The dispersion medium used to prepare the composition may be included in such an amount that the solids concentration of the composition usually ranges 1 wt% to 50 wt%, or 5 wt% to 50 wt%, or 10 wt% to 30 wt%.

The method or order of dispersing or dissolving the electrode active material and the first binder in the dispersion medium is not limited to a particular method or order, and may include, for example, a method that adds the electrode active material and the first binder to the dispersion medium and mixes them, a method that dissolves or disperses the first binder in the dispersion medium, and finally, adds the electrode active material and mixes them. The mixing means may include, for example, a ball mill, a sand mill, a bead mill, a pigment dispersion machine, a stone mill, an ultrasonic dispersion machine, a homogenizer and a planetary mixer. The mixing may be performed, for example, in the range of room temperature to 80°C for 10 minutes to a few hours.

Subsequently, the composition is spray dried. The spray drying method dries the slurry while spraying the slurry in hot air. The spraying method of equipment used in the spray drying method includes a rotary disc method and a pressure nozzle method. The rotary disc method is a method which feeds the composition into almost the center of the disc that rotates at high speed, urges the composition to the periphery of the disc by the centrifugal force of the disc, to create mist and dries it. The rotation rate of the disc relies on the size of the disc, but is usually from 5,000 rpm to 35,000 rpm, and preferably from 15,000 rpm to 30,000 rpm. Meanwhile, the pressure nozzle method is a method which sprays the composition through the thin nozzle together with air or a liquid such as a high pressure fluid to convert into mist and dries it.

In an embodiment of the present disclosure, the temperature of the hot air may be controlled to 80°C to 250°C on the basis of the reactor inlet temperature (input) to form the granule structure having a high amount of first binder on the surface. In the present disclosure, the temperature of the hot air may be preferably controlled to 175°C to 220°C, and more preferably 180°C to 220°C, taking into account the gradient of the amount of first binder and the aspect ratio. In the spray drying method, the hot air suction method is not limited to a particular method, and may include, for example, a method of cocurrent flow of hot air and spray direction in the horizontal direction, a method of spraying from a drying tower top to cause it fall together with hot air, a method of countercurrent contact between sprayed droplets and hot air, a method of cocurrent flow of sprayed droplets and hot air, fall by gravity and countercurrent contact. Meanwhile, in an embodiment of the present disclosure, in the spray drying, the outlet temperature (the temperature of hot air released from the reactor) of the reactor may be controlled to 90°C to 130°C.

When the outlet temperature and/or a difference △T between inlet temperature and outlet temperature is low, drying is not properly performed, so particles containing a large amount of remaining solvent may be formed, thereby failing to form spherical particles of uniform shape, resulting in agglomeration of granules or amorphous granules. Meanwhile, when the inlet temperature is overly high and △T is large, granulation fails due to overdrying and particles having very small particle size D50 and low aspect ratio may be produced. Accordingly, to control the particle size to the proper level together with high aspect ratio and less binder agglomeration, it is necessary to control the inlet temperature and outlet temperature within the proper range.

Additionally, heating may be optionally performed to cure the surface of the result obtained by the spray drying, i.e., the granules, and in this instance, the thermal treatment temperature may be usually from 80°C to 300°C.

In this instance, as described above, the composition for manufacturing the granules may further include the conductive material.

Subsequently, the granules may be mixed with the second binder particles to prepare a mixture.

The process of mixing the granules with the second binder particles may be performed using a mixing device, for example, a ball mill, a sand mill, a bead mill, a pigment dispersion machine, a stone mill, an ultrasonic dispersion machine, a homogenizer and a planetary mixer. The mixing may be performed, for example, in the range of room temperature to 80°C for 10 minutes to a few hours.

The mixture of the obtained granules and the second binder particles is coated on at least one surface of the current collector. In this instance, the current collector may have the primer layer including the conductive material and the binder as described above on all or part of at least one surface.

According to an embodiment of the present disclosure, the prepared mixture of the granules and the second binder particles may be fed into a roll-type press forming machine by a feeding equipment, for example, a screw feeder to form the electrode active material layer, and in this instance, and the mixture of the granules and the second binder particles may be supplied to the current collector and fed into the rolls of the press forming machine at the same time to directly stack the electrode active material layer on the current collector. Alternatively, the granules and the second binder particles may be applied to the current collector and evenly spread using a blade to adjust the thickness, and then formed by the press machine to form the electrode active material layer.

In these methods, the roll press forming temperature may be from 100°C to 150°C, and may be preferably higher than the onset temperature, the melting point or the glass transition temperature of the second binder particles. In the roll press forming, the forming speed may be usually from 0.1 m/min to 20 m/min, or from 1 m/min to 10 m/min. Additionally, the press nip pressure between rolls may be usually from 0.2 kN/cm to 30 kN/cm, or from 0.5 kN/cm to 10 kN/cm.

To reduce the thickness difference of the formed electrode and increase the density of the electrode active material layer, thereby contributing to high capacity, pressing may be additionally performed if necessary. The post-pressing method generally uses a press process by rolls. In the roll press process, two cylindrical rolls are vertically arranged in parallel at a small interval, and the electrode is placed between the rolls and pressed by rotating the rolls in the opposite directions. The rolls may adjust the heating or cooling temperature.

Hereinafter, examples will be described in detail to particularly describe the present disclosure. However, the examples according to the present disclosure may be modified in many other forms, and the scope of the present disclosure should not be interpreted as being limited to the following examples. The examples of the present disclosure are provided to explain the present disclosure to those skilled in the art thoroughly and completely.

### EXAMPLE

### [Example 1]

### 1. Negative electrode

### (1) Preparation of granule

Artificial/natural graphite (1:1 at a weight ratio) as a negative electrode active material, carbon black (SuperC65) as a conductive material and SBR (styrene-butadiene copolymer) as a first binder were mixed with water as a dispersion medium at a weight ratio of 97:1:2 through a homogenizer to prepare a composition having viscosity at about 1000 cPs level. In this instance, the solid content in the composition was 30 wt%.

The prepared composition was fed into a spray dryer together with hot air in the pressure range condition of -40 mmH₂O to dry it. In this instance, the condition of the spray dryer was controlled to the inlet temperature of 180°C, the outlet temperature of 90°C, and the rotation rate of 18,000 rpm. Large particles of 150 *µ*m or more were removed from the dried product using an industrial sieve to prepare granules.

The granules had a central portion including the plurality of negative electrode active materials, the conductive material and a surface portion located on the outer side of the central portion and including the first binder particles binding the plurality of negative electrode active materials and the conductive material. The average particle size D50 of the obtained granules was 55 *µ*m, and the aspect ratio was 0.97.

### (2) Manufacture of negative electrode

The obtained granules were mixed with HDPE powder (average particle size D50 10 *µ*m) as second binder particles at a weight ratio of 99:1 to prepare a mixture, and the prepared mixture of the granules and the second binder particles was coated on both surfaces of a current collector having a primer layer using a blade coater in the uniform coating thickness condition of 400 mg per 25cm² of the current collector, and pressed by a sheeting machine which is a roll-to-roll hot roll pressing machine under 0.7 tons of pressure per cm at 60°C in the speed condition of 2m per minute to manufacture a negative electrode, followed by additional rolling at 120°C to the porosity of the electrode of 27%.

### [Example 2]

A negative electrode was manufactured by the same method as Example 1, except that in Example 1, artificial/natural graphite (a weight ratio of 1:1) as a negative electrode active material, carbon black (SuperC65) as a conductive material and SBR (styrene-butadiene copolymer) as a first binder at a weight ratio of 96:1:3 and LDPE powder (average particle size D50 of 10 *µ*m) as the second binder particles were used to manufacture the electrode, and additional rolling was performed at 80°C.

### [Comparative Example 1]

A negative electrode was manufactured by the same method as Example 1, except that in Example 1, second binder particles were not used.

### [Comparative Example 2]

A negative electrode was manufactured by the same method as Example 2, except that in Example 2, second binder particles were not used.

### [Comparative Example 3]

The granules obtained in Example 1 : HDPE powder : carboxymethyl cellulose (CMC) were mixed with water as a dispersion medium at a mass ratio of 98 : 1 : 1 through a homogenizer to prepare a composition. The obtained composition was coated on a current collector having a primer layer using a blade and dried at 60°C, and pressed by a sheeting machine which is a roll-to-roll hot roll pressing machine under 0.7 tons of pressure per cm at 60°C in the speed condition of 2m per minute to manufacture a negative electrode, followed by additional rolling at 120°C to the porosity of the electrode of 27%.

### [Evaluation results]

### Electrode loading (mg/25cm²)

The as-prepared one-sided electrode was punched into 25 cm², and the weight of the electrode minus the weight of the current collector was measured.

### Density (g/cm³)

The electrode density (g/cm³) was calculated by dividing electrode loading (mg/25cm²) by thickness (cm) and area (25cm²) of the electrode.

### Adhesion strength (gf/20mm)

A double-sided tape was attached to a slide glass, and the electrode punched into 20 mm X (100) mm was placed thereon and adhered by rolling back and forth on a 3kg roller ten times, and a force to peel the electrode from the slide glass was measured by pulling at 30 mm/min using a UTM (TA) machine. In this instance, a measurement angle of the slide glass and the electrode was 90°.

### Electrode tortuosity measurement (Bending Diameter (Φ))

When the electrode of 5x5(cm²) area was wound in a bar diameter direction using a sus bar of from 2Φ to 25Φ, the bar diameter where electrode separation occurred in the electrode sample was measured.

### Aspect ratio of second binder particles

A 3M tape was attached to the electrode active material layer surface of the electrode of 5x5(cm²) area, a 3kg loading roller rolled back and forth over the upper surface of the 3M tape once, and subsequently, the 3M tape was detached. In this instance, a thickness of a part of the electrode active material layer was removed from the surface together with the 3M tape, and the inside of the electrode active material layer was exposed. An SEM image of the second binder particles was obtained by observing the exposed electrode active material layer inside surface by SEM, and an aspect ratio of the second binder particles was measured from the SEM image. Here, the aspect ratio of the second binder particles was defined as a ratio of short axis to long axis in cross section of the second binder particles on the SEM image. Specifically, ten regions of 100*µ*m X 100*µ*m were randomly selected from the exposed electrode active material layer inside surface, and the aspect ratio of the second binder particles measured from the SEM images of the second binder particles in the selected regions was calculated and the average value was calculated, and the results are shown in TABLE 1.

### Domain size of second binder particles

A 3M tape was attached to the electrode active material layer surface of the electrode of 5x5(cm²) area, a 3kg loading roller rolled back and forth over the upper surface of the 3M tape once, and subsequently, the 3M tape was detached. In this instance, a thickness of a part of the electrode active material layer was removed from the surface together with the 3M tape, and the inside of the electrode active material layer was exposed. An SEM image of the exposed electrode active material layer inside surface was captured by SEM, and subsequently, a domain area of the second binder particles was set through an image analyzer program (Image J) and the area of the corresponding domain was measured to calculate the domain size of the second binder particles.

In this instance, the domain size of the second binder particles was defined as the area of the domain in which two or more second binder particles were agglomerated. Accordingly, the second binder particles that exist as one particle without agglomeration were excluded from domain size calculation. That is, it can be seen that the smaller domain size of the second binder particles, the fewer agglomerates of two or more second binder particles.

Specifically, ten regions of 100*µ*m X 100*µ*m were randomly selected from the exposed electrode active material layer inside surface, the domain size of the second binder particles measured from SEM images of the second binder particles in the selected regions was calculated and the average value was calculated, and the results are shown in TABLE 1.

**[TABLE 1]**

| | Electrode loading (mg/25cm ²) | Density (g/cm³) | Adhesion strength (gf/20mm) | Electrode tortuosity (Bending Diameter) (Φ) | Aspect ratio of second binder particles | Domain size of second binder particles (*µ*m²) |
|---|---|---|---|---|---|---|
| Example 1 | 412 | 1.60 | 88.6 | 2 | 0.97 | 10 |
| Example 2 | 410 | 1.54 | 90.2 | 2 | 0.92 | 12 |
| Comparative Example 1 | 413 | 1.61 | 20.0 | 16 | - | - |
| Comparative Example 2 | 409 | 1.56 | 45.0 | 10 | - | - |
| Comparative Example 3 | 415 | 1.52 | 50.0 | 8 | 0.97 | 28 |

Referring to the above TABLE 1, it was confirmed that compared with the electrodes of Comparative Examples 1 to 3 using no second binder particles or manufactured by the wet method, the electrodes (negative electrodes) of Examples 1 and 2 having the electrode active material layer including the granules including the electrode active material and the first binder and the second binder particles without using the solvent had the improved bond strength between granules and remarkably improved adhesion strength between the current collector and the electrode active material layer, and separation of granules of the electrode active material layer was prevented, thereby significantly improving the electrode tortuosity. Additionally, it was confirmed that in the electrode of Comparative Example 3 manufactured by the wet method, dispersion of the second binder particles was not uniform compared with the dry method using no solvent like the electrodes of Examples 1 to 3, and in many cases, agglomeration of the plurality of second binder particles was observed, and the domain size of the second binder particles was increased.

## Claims

1. An electrode comprising:
a current collector and an electrode active material layer located on at least one surface of the current collector,
wherein the electrode active material layer includes granules including an electrode active material and a first binder; and second binder particles.

2. The electrode according to claim 1,
wherein a domain size of the second binder particles is from 10 *µ*m² to 15 *µ*m².

3. The electrode according to claim 1,
wherein a melting point of the second binder particles is 150°C or less.

4. The electrode according to claim 1,
wherein an average particle size (D50) of the granules is larger than an average particle size (D50) of the second binder particles.

5. The electrode according to claim 1,
wherein a ratio of an average particle size (D50) of the granules to an average particle size (D50) of the second binder particles is from 1:0.1 to 1:0.5.

6. The electrode according to claim 1,
wherein an average particle size (D50) of the granules is from 40 *µ*m to 100 *µ*m.

7. The electrode according to claim 1,
wherein an average particle size (D50) of the second binder particles is from 4 *µ*m to 10 *µ*m.

8. The electrode according to claim 1,
wherein a weight ratio of the granules to the second binder particles is from 99:1 to 60:40.

9. The electrode according to claim 1,
wherein the second binder particles include polyethylene, high density polyethylene HDPE, low density polyethylene LDPE, polypropylene, a copolymer EVA of ethylene and vinyl acetate, or two or more of them.

10. The electrode according to claim 1,
wherein the granules further include a conductive material.

11. The electrode according to claim 1,
wherein the first binder includes a diene-based polymer, an acrylate-based polymer, a styrene-based polymer, a polyvinyledene fluoride (PVDF)-based polymer, a polyacrylonitrile-based polymer, a vinyl-based polymer, a polyoxide-based polymer, a polyacrylamide, a cellulose-based polymer or two or more of them.

12. The electrode according to claim 1,
wherein an amount of the electrode active material is from 95 parts by weight to 98 parts by weight, and an amount of the first binder is from 2 parts by weight to 5 parts by weight, based on 100 parts by weight of the granules.

13. A method for manufacturing the electrode according to claim 1, the method comprising the steps of:
drying a composition including the electrode active material, the first binder, and a first water-based dispersion medium by a spray drying method to manufacture the granules;
mixing the granules with the second binder particles to prepare a mixture; and
coating the mixture on the at least one surface of the current collector and rolling to form the electrode active material layer.

14. An electrochemical device comprising the electrode according to any one of claims 1 to 12.

15. The electrochemical device according to claim 14,
wherein the electrochemical device is a secondary battery.
